# EUROPÄISCHE PATENTANMELDUNG

(11) **EP 2 273 240 A2**
(43) Veröffentlichungstag der Anmeldung: **12.01.2011**
(21) Anmeldenummer: 10168602.0
(22) Anmeldetag: 06.07.2010
(51) Int. Cl.: G01F 23/76, G01F 23/72

(54) **Niveausonde**

(30) Priorität: 07.07.2009 DE 102009031946
(71) Anmelder: Gestra AG, 28215 Bremen (DE)
(72) Erfinder: Schröter, Holger, 27321, Morsum (DE); Klattenhoff, Jürgen, 28215, Bremen (DE)
(74) Vertreter: Eisenführ, Speiser & Partner

(57) **Zusammenfassung**

Die vorliegende Erfindung betrifft eine Niveausonde (1) zum Erfassen eines Füllstandes eines flüssigen Mediums in einem Behälter umfassend ein eine Längsachse aufweisendes Messrohr (2) zum Anordnen in dem Behälter, mit einem Rohrinnenraum (3) und einem den Rohrinnenraum (3) umgebenden Rohrmantel, einen in dem Messrohr (2) im Rohrinnenraum (3) angeordneten Schwimmkörper (4) zum Aufschwimmen in dem Medium und wenigstens einen in dem Messrohr (2) angeordneten Messaufnehmer (26) zum Erfassen der Position des Schwimmkörpers (4) in dem Messrohr (2) in Richtung der Längsachse aufweist, wobei der Schwimmkörper (4) geschlossen und teilweise mit einer Flüssigkeit (8) gefüllt ist.

## Beschreibung

Die vorliegende Erfindung betrifft eine Niveausonde zum Erfassen eines Füllstandes eines flüssigen Mediums in einem Behälter sowie ein Verfahren zum Messen des Füllstandes. Außerdem betrifft die Erfindung einen Druckbehälter mit einer Niveausonde.

Niveausonden zum Erfassen eines Füllstandes eines flüssigen Mediums in einem Behälter sind allgemein bekannt. Insbesondere in Wasserkesseln, die im Betrieb unter Druck stehen, ist es wünschenswert den Füllstand des Wassers und damit indirekt auch die Menge des verbleibenden Wassers im flüssigen Zustand zu erfassen, um hierdurch Rückschlüsse auf Betriebszustände des Wasserkessels ziehen zu können. So muss insbesondere auch vermieden werden, dass in einem Wasserkessel das flüssige Wasser vollständig verdampft, so dass Wasser nur noch als Wasserdampf - und damit als sogenannter trockener Wasserdampf - vorhanden ist.

So sind kapazitive Niveausonden bekannt, die beispielsweise eine stabförmige Elektrode aufweisen, die in die Flüssigkeit einzutauchen ist. Über die Messung der Kapazität an der Elektrode können Rückschlüsse über den Füllstand gezogen werden. Der Füllstand der Flüssigkeit verändert hierbei direkt die gemessene Kapazität. Problematisch bei solchen kapazitiven Niveausonden ist die notwendige elektrische Isolierung der Elektrode gegen die Flüssigkeit, besonders bei hohen Temperaturen.

Andere Verfahren schlagen eine induktive Messung vor, bei der induktiv die vertikale Position eines Schwimmers und damit indirekt über die Schwimmerposition der Füllstand bestimmt wird. Auch bei solchen Niveausonden besteht das Problem die zur induktiven Messung benötigte Spule gegen die Flüssigkeit zu isolieren. Es kommt hinzu, dass der Schwimmer dem Behälterdruck ausgesetzt ist. Insbesondere in Wasserkesseln kann sich der Behälterdruck verändern und mitunter hohe Werte, wie beispielsweise über 150 bar annehmen. Durch diese Drücke besteht zum einen die Gefahr, dass der Schwimmkörper eingedrückt werden kann und dadurch sein Schwimmverhalten verändert, wodurch die Messung verfälscht werden kann. Zudem besteht die Gefahr, dass der Schwimmer durch den Druck zerstört wird. Dabei ist zu beachten, dass der Schwimmer aus einem solchen Material gefertigt sein muss bzw. ein solches Material aufweisen muss, dass seine Position induktiv erfassbar ist.

Somit liegt der folgenden Erfindung die Aufgabe zugrunde, wenigstens eines der genannten Probleme zu beheben oder zu verringern. Insbesondere soll eine Lösung vorgeschlagen werden, die hinsichtlich Isolierung und Druckempfindlichkeit verbessert ist. Zumindest soll eine alternative Lösung vorgeschlagen werden.

Erfindungsgemäß wird eine Niveausonde gemäß Anspruch 1 vorgeschlagen.

Demnach weist die Niveausonde ein eine Längsachse aufweisendes Messrohr, insbesondere ein zylindrisches Messrohr auf, mit einem Rohrmantel und einem Rohrinnenraum. Das Messrohr ist in dem Behälter, der das flüssige Medium enthält, anzuordnen, nämlich vorzugsweise senkrecht und eingetaucht in das flüssige Medium.

In dem Messrohr ist ein Schwimmkörper angeordnet, der in dem flüssigen Medium schwimmen kann, also insgesamt eine geringere Dichte aufweist als das flüssige Medium. Vorzugsweise ist ein solcher Schwimmkörper als Kugel, insbesondere Hohlkugel ausgebildet. Der Schwimmkörper schwimmt somit an der Oberfläche des flüssigen Mediums und wird dabei in dem Messrohr geführt, nämlich entlang dessen Längsachse.

Zum Erfassen der Position des Schwimmkörpers in dem Messrohr, und damit in Richtung der Längsachse ist wenigstens ein Messaufnehmer vorgesehen, der vorzugsweise in dem Rohrmantel angeordnet ist.

Der Schwimmkörper ist ein geschlossener Hohlkörper und teilweise mit einer Flüssigkeit gefüllt. Dabei wird vorzugsweise genau die Flüssigkeit verwendet, die auch in den Behälter enthalten ist. Vorzugsweise weisen also das flüssige Medium und die Flüssigkeit im Wesentlichen dieselben Eigenschaften auf. So wird zum Messen des Füllstandes von flüssigem Wasser in einem Kessel, der den Behälter bildet, vorgeschlagen, den Schwimmkörper teilweise mit Wasser zu füllen.

Es liegt die Idee zugrunde - was als eine ideale Situation angesehen werden kann - in dem Schwimmkörper bezogen auf Druck, Temperatur und/oder das Verhältnis oder Zusammenspiel flüssiger und gasförmiger Phase des Mediums bzw. der Flüssigkeit gleiche oder ähnliche Verhältnisse zu schaffen. Dabei ist zu beachten, dass bei Druckkesseln der Druck im Kessel in einem Zusammenhang mit der Temperatur im Kessel steht, weil sich mit zunehmender Temperatur mehr Wasserdampf und ein höherer Druck ausbilden. Ist der Schwimmkörper teilweise mit Flüssigkeit, insbesondere mit Wasser, wie in dem Kessel in dem gemessen wird, gefüllt, so bildet sich auch in dem Schwimmkörper mit zunehmender Temperatur mehr Wasserdampf und während der Druck im Kessel steigt, steigt auch der Druck in dem Schwimmkörper.

Somit wird ein möglichst geringer Differenzdruck zwischen dem Hohlraum des Schwimmkörpers und dem Kessel erreicht. So kann auf einfache Weise ein Schwimmkörper geschaffen werden, der zum Einsatz in Behältern mit hohen Drücken geeignet ist

Die Menge der Flüssigkeit in dem Schwimmkörper richtet sich auch nach dem vorgesehenen Einsatzbereich der Niveausonde. Insbesondere danach, in welchem flüssigen Medium der Schwimmkörper schwimmen soll und welche Temperatur und/oder Druckbereiche zu erwarten sind. Der Maximalwert der enthaltenen Flüssigkeit bestimmt sich dadurch, dass der Schwimmkörper noch schwimmfähig sein muss. Unter der Annahme, dass die Schwimmkörperhülle eine hohe Dichte aufweist, darf der Schwimmkörper nicht vollständig mit Flüssigkeit gefüllt sein. Die Untergrenze der enthaltenen Flüssigkeit richtet sich nach dem maximal vorgesehenen Druckbereich und damit einhergehend der maximal vorgesehenen Temperatur im Einsatzbereich. Wird dieser maximale Druck in dem Schwimmkörper erreicht bzw. wird eine damit einhergehende maximale Temperatur erreicht, so muss von der Flüssigkeit in dem Schwimmkörper noch eine flüssige Phase vorhanden sein. Der maximale Druck und die damit einhergehende maximale Temperatur betrifft hierbei einen Gleichgewichtszustand, bei dem von dem flüssigen Medium, also dem Medium eine flüssige und gleichzeitig eine gasförmige Phase vorhanden ist. In einem Gleichgewichtszustand von Wasser und Wasserdampf ist einem Druck von 40 bar etwa eine Temperatur von 250 °C zugeordnet und einem Druck von 165 bar ist etwa eine Temperatur von 350 °C zugeordnet.

Gemäß einer Ausführungsform wird vorgeschlagen, dass wenigstens zwei den Rohrinnenraum umgebende Messspulen in dem Rohrmantel eingeschlossen und in Richtung der Längsachse des Messrohres beabstandet angeordnet sind. Diese Messspulen sind vorbereitet zum Bestimmen der Position des Schwimmkörpers in Längsrichtung über die Erfassung der Induktivität der Messspulen. Der Schwimmkörper verändert somit abhängig von seiner axialen Position die Induktivität der Messspulen, woraus die Position bestimmt werden kann. Durch Verwendung wenigstens zweier Messspulen ist die Position eindeutig bestimmbar - bei nur einer Messspule wären jedenfalls rechnerisch jedem bestimmten Abstand zwischen Schwimmkörper und Spule zwei Positionen zuordnenbar - und durch die Verwendung mehrerer Messspulen ist grundsätzlich die Bestimmung der Position mit höherer Genauigkeit möglich. Vorzugsweise sind je mehr Messspulen vorzusehen, je länger das Messrohr ist. Bei mehr als zwei Messspulen ist in axialer Richtung eine äquidistante Anordnung zu bevorzugen.

Gemäß einer bevorzugten Ausführungsform wird vorgeschlagen, dass der Rohrmantel doppelwandig insbesondere aus austenitischem oder paramagnetischem Material gefertigt ist. Der Rohrmantel ist so vorzusehen, dass darin ein rohrförmiger Spalt, insbesondere bei einem zylindrischen Messrohr ein Ringspalt ausgebildet ist. Wenigstens zwei der Messaufnehmer, die als Messspulen ausgebildet sind, sind in dem rohrförmigen Spalt bzw. Ringspalt angeordnet. Dabei ist eine symmetrische Anordnung insoweit vorzusehen, als dass eine Mittelachse des Messrohrs im Wesentlichen jeweils durch einen Mittelpunkt jeder Messspule verläuft. Mit anderen Worten sind mehrere Messspulen insbesondere als Ringe entlang des Messrohres angeordnet, wobei sie in dem rohrförmigen Spalt, insbesondere Ringspalt, angeordnet sind. Die Messspulen können somit in dem rohrförmigen Spalt eingeschlossen sein.

Eine Niveausonde gemäß einer vorteilhaften Ausgestaltung umfasst eine Sondenbasis mit einem Befestigungsflansch zum Befestigen an einer Öffnung einer Behälterwand des Behälters. Die Niveausonde wird hierbei mit ihrer Sondenbasis an und damit in der Öffnung so befestigt, dass das Messrohr in den Behälter ragt, insbesondere bestimmungsgemäß vertikal, um dadurch in das flüssige Medium eingetaucht zu werden. Ein Teil der Sondenbasis ist hierbei außerhalb des Behälters angeordnet und die Öffnung wird durch die Sondenbasis verschlossen, wenn dieses mit seinem Befestigungsflansch fest an der Behälterwand in der Öffnung befestigt ist. Bei dieser Ausgestaltung ist das Messrohr ebenfalls doppelwandig ausgebildet, so dass eine äußere und eine innere Rohrwand vorgesehen ist, zwischen denen ein rohrförmiger Spalt, insbesondere ein Ringspalt ausbildet und in dem die Messspulen angeordnet sind. Der Rohrmantel und damit die äußere und innere rohrförmige Wandung ist so an der Sondenbasis angebracht, dass der rohrförmige Spalt, insbesondere Ringspalt vollständig gegen den Behälterinnenraum abgedichtet ist. Die äußere und die innere Rohrwandung sind somit fest und für das flüssige Medium undurchdringlich an der Sondenbasis angebracht. An der der Sondenbasis abgewandten Seite sind die äußere und die innere Rohrwandung ebenfalls abschließend und für das flüssige Medium undurchdringlich miteinander verbunden, beispielsweise mit einer Ringnaht verlötet oder verschweißt. Auch die Anbringung an der Sondenbasis kann mittels Schweißen oder Löten erfolgen. So ist das doppelwandige Messrohr fest an der Sondenbasis befestigt und der rohrförmige Spalt ist allenfalls zur Sondenbasis hin bzw. von der Sondenbasis aus zugänglich.

Das Messrohr ist somit so geformt und an der Sondenbasis angebracht, dass der Rohrspalt und damit die darin angeordneten Messspulen nur von außerhalb des Behälters über der Sondenbasis zugänglich ist, wenn die Sondenbasis bestimmungsgemäß in einer Öffnung der Behälterwandung angeordnet ist. Eine solche Zugänglichkeit betrifft insbesondere das Anordnen bzw. Führen von elektrischen Leitungen zu den Messspulen. Aus Sicht des Behälterinneren sind die Messspulen somit vollständig eingekapselt. Dichtungen im Sinne von temporären Dichtungen, Kunststoffdichtungen und/oder gummiartigen Dichtungen sind nicht erforderlich, wodurch einige Nachteile wegfallen. So besteht durch das Einkapseln, das vollständig durch metallisches Material erfolgen kann, praktisch keine Gefahr von Dichtungsermüdungen

und/oder dem Durchdiffundieren von Materialien durch gummiartige Dichtungen oder Kunststoffdichtungen von einem Medium, das durch metallische Werkstoffe nicht oder in einem wesentlich geringeren Umfang zu erwarten ist.

Eine weitere Ausgestaltung schlägt vor, dass wenigstens eine erste und eine zweite Öffnung zum Herstellen einer Verbindung zwischen dem Rohrinnenraum und einem Behälterinnenraum vorgesehen sind, so dass das Medium im Wesentlichen frei in dem Messrohrinnenraum ansteigen oder -fallen kann. Insbesondere ist eine erste Öffnung in einer der Sondenbasis abgewandten Stirnseite des Messrohrs angeordnet, so dass das flüssige Medium durch diese Öffnung in das Messrohr einströmen bzw. aus dem Messrohr ausströmen kann. Mit anderen Worten weist das Messrohr eine offene Stirnseite auf, nämlich bestimmungsgemäß unten. Bei Verwendung der Niveausonde sollte diese Öffnung immer in das flüssige Medium eingetaucht sein.

Die zweite Öffnung ist zum ermöglichen eines Druckausgleichs vorgesehen und somit bestimmungsgemäß oben angeordnet. Strömt flüssiges Medium durch die erste Öffnung ein, kann Gas aus dem Messrohr durch die zweite Öffnung entweichen und sorgt somit im Grunde für eine freie Kommunizierung. Die zweite Öffnung kann grundsätzlich im der Sondenbasis zugewandten Bereich des Messrohres angeordnet sein. Vorzugsweise führt die zweite Öffnung aber von dem Innenraum des Messrohres durch die Sondenbasis hindurch zum Innenraum des Behälters. Hierdurch ist eine einfache Ausgestaltung dieser zweiten Öffnung möglich. Das Messrohr braucht somit nicht für diese zweite Öffnung bearbeitet zu werden. Insbesondere bei einem doppelwandigen Messrohr wird hierdurch die Gefahr einer Leckstelle in dem rohrförmigen Spalt verhindert. Das Messrohr kann auf einfache Weise durch zwei ineinander geschobene Zylinder hergestellt werden, die lediglich an einer Stirnseite verbunden werden müssen und an der anderen Stirnseite an der Sondenbasis für das flüssige Medium undurchlässig befestigt werden müssen. Hierdurch ist auch ein stabiler Ringspalt für die Messspulen herstellbar, der hohen in Behältern auftretenden Drücken standhalten kann. Der rohrförmige Spalt, insbesondere Ringspalt kann zudem zum Stützen und/oder Halten des Messsonde zumindest teilweise ausgeschäumt sein, ausgegossen sein oder auch mit weiteren Stützelementen wie Stützringen, insbesondere keramischen Stützringen, verstärkt sein. Zur Verstärkung können beispielsweise auf den rohrförmigen Spalt bzw. Ringspalt angepasste Keramikhülsen verwenden werden.

Gemäß einer weiteren Ausführungsform wird vorgeschlagen, wenigstens einen Temperatursensor zum Erfassen einer Temperatur in dem Behälter, insbesondere einer Temperatur des flüssigen Mediums oder seiner gasförmigen Phase, insbesondere Wasserdampf vorzusehen. Diese Temperatur kann in die Bestimmung des Füllstandes einfließen. So kann aus der Temperatur die Dichte des flüssigen Mediums abgeschätzt und daraus die Eintauchtiefe des Schwimmkörpers bestimmt bzw. in seiner Genauigkeit verbessert werden.

Vorzugsweise ist die Niveausonde für einen Druckbereich, vorzugsweise Satt-Dampf, in dem Behälter mit einer vorbestimmten Druckobergrenze, vorzugsweise im Satt-Dampfbereich, vorgesehen. Diese Druckobergrenze kann oberhalb von 40 bar, vorzugsweise oberhalb von 80 bar und insbesondere oberhalb von 120 bar liegen. Der Schwimmkörper ist dabei so vorbereitet und mit so viel Flüssigkeit gefüllt, dass diese noch eine flüssige Phase aufweist, wenn der Druck in dem Schwimmkörper die Druckobergrenze des vorbestimmten Druckbereichs erreicht hat. In dem Schwimmkörper soll somit wenigstens so viel Flüssigkeit, insbesondere Wasser, vorhanden sein, dass diese auch bei Erreichen der Druckobergrenze nicht vollständig in die gasförmige Phase übergeht, insbesondere nicht vollständig verdampft. Hierdurch soll über den gesamten zugelassenen Druckbereich - mit dem im Wesentlichen auch ein zugeordneter Temperaturbereich einhergeht - im Wesentlichen in dem Schwimmkörper gleiche Verhältnisse wie in dem Behälter geschaffen werden. Durch diese Minimalmenge der Flüssigkeit soll auch bei maximal zulässigem Druck noch kein trockener Wasserdampf in dem Schwimmkörper entstehen. Mit anderen Worten muss auch bei dem maximal zulässigen Druck die Sattdampfbedingung erfüllt sein. Durch das Schaffen im Wesentlichen gleicher Verhältnisse soll insbesondere der Druck im Schwimmkörper und im Behälter möglichst gleich sein.

Vorzugsweise ist das Messrohr zylindrisch ausgebildet und/oder der Schwimmkörper als Kugel ausgebildet. Ein kugelförmiger Schwimmkörper - wobei eine hohle Kugel gemeint ist - weist üblicherweise im Vergleich zu anderen Formen eine höhere Druckbeständigkeit gegen Druck von außen auf. Zudem kann sich ein als Kugel ausgebildeter Schwimmkörper im Messrohr nicht verkanten. Eine bevorzugte Ausgestaltung eines Schwimmkörpers ist als Hohlkugel mit einer Wandstärke von 0,1 bis 0,3, insbesondere etwa 0,2 mm bei einem ferritschen Material und einem Außendurchmesser von 20 bis 40 mm, insbesondere etwa 30 mm.

Vorzugsweise weist der Schwimmkörper eine Wandung aus einem ferromagnetischen Stahl auf. Hierdurch kann eine hohe Stabilität bei gleichzeitig starkem Einfluss des Schwimmkörpers auf die Induktivität der Messspulen erreicht werden.

In einer bevorzugten Niveausonde gemäß der vorliegenden Erfindung ist ein Sicherungselement vorgesehen, welches verhindert, dass der Schwimmkörper das Messrohr verlässt und vorzugsweise als Ringscheibe oder als Sicherungsstift ausgebildet ist. Obwohl der Schwimmkörper der Niveausonde vorteilhaft so ausgebildet ist, dass er den im Betrieb der Niveausonde zu erwartenden Temperaturen und Drücken im jeweiligen Einsatzort der Niveausonde beschädigungsfrei widersteht, kann es in Einzelfällen, beispielsweise bei Überschreitung der Temperaturen und/oder Drücke zu einer Beschädigung des Schwimmkörpers kommen. Wenn das Gas, welches dem Schwimmkörper seinen Auftrieb verleiht, aus dem Schwimmkörper entweicht, beginnt der Schwimmkörper zu sinken. Die bevorzugte Niveausonde ist dazu ausgebildet, den Schwimmkörper mittels des Sicherungselementes am Verlassen des Messrohrs zu hindern. Als Sicherungselement sind vorzugsweise eine Ringscheibe oder ein Sicherungsstift vorzusehen, andere mögliche Sicherungselemente betreffen beispielsweise Gitter.

Der Schwimmkörper der erfindungsgemäßen Niveausonde weist vorzugsweise eine oder mehrere Sollbruchstellen auf. Die Sollbruchstellen sind hierbei vorzugsweise so dimensioniert, dass sie als erstes versagen, wenn die für den Schwimmkörper noch zulässigen Betriebstemperaturen und/oder -drücke erreicht bzw. überschritten sind. Die Sollbruchstellen sind vorzugsweise so ausgebildet, dass sie ein Öffnen des Schwimmkörpers ermöglichen, ohne dass sich Vorsprünge und/oder eine veränderte Geometrie des Schwimmkörpers derart ergeben, dass dieser beim Absinken innerhalb der Niveausonde verkantet oder verklemmt. Die erfindungsgemäße Niveausonde kann auch voreilhaft dadurch weitergebildet werden, dass aus dem Schwimmkörper entlang einer Sollbruchstelle ein im Verhältnis zur Größe des Schwimmkörpers kleiner Abschnitt vollständig vom Schwimmkörper abgetrennt wird und aus dem Messrohr der Niveausonde mittels Absinken austritt. Ein hinreichend kleiner Abschnitt nimmt keinen negativen Einfluss auf den Inhalt üblicher Druckbehälter, in denen die erfindungsgemäße Niveausonde zum Einsatz kommt. Der abgetrennte Abschnitt sinkt zum Boden des Druckbehälters, wo er vom dort angelagerten Schlamm aufgenommen wird.

In einer vorteilhaften Ausführungsform ist die Niveausonde zum Bestimmen einer Füllstandsüberschreitung und/oder einer Füllstandsunterschreitung und/oder eines Schwimmkörperdefekts ausgebildet. Vorzugsweise erfolgt die Bestimmung der Füllstandsüberschreitung und/oder -unterschreitung und/oder des Schwimmkörperdefekts mittels der Erfassung der Induktivität der Messspulen. Die Messspulen sind vorzugsweise dazu eingerichtet, jeweils unabhängig voneinander mit einer bzw. mit jeweils einer Auswerteeinheit verbunden zu werden. Die Auswerteeinheit bzw. die jeweiligen Auswerteeinheiten sind vorteilhaft dazu ausgebildet, die von den Messspulen erfassten Induktivitätsänderungen bzw. Induktivitäten in Form von repräsentativen Messwerten auszulesen und/oder in Tabellen oder Datenbanken abzulegen.

Die Ausbildung der erfindungsgemäßen Niveausonde in vorstehend genannter Weise, wonach zusätzlich zur Bestimmung des Füllstandes auch eine Bestimmung einer Füllstandsüberschreitung und/oder einer Füllstandsunterschreitung und/oder eines Schwimmkörperdefekts möglich ist, ist vor dem Hintergrund besonders vorteilhaft, dass auf diese Weise mit ein und demselben apparativen Aufbau - der Niveausonde - weitere Sicherheitsfunktionen zusätzlich zur Füllstandsbestimmung wahrgenommen werden. Mittels der erfindungsgemäßen Niveausonde kann auf diese Weise automatisch bei Eintreten von Hochwasser in einem Druckbehälter (Füllstandsüberschreitung) der Betrieb des Druckbehälters gestoppt werden. Dies gilt in analoger Weise auch für Niedrigwasser (Fülllstandsunterschreitung) im Druckbehälter oder bei Auftreten eines Schwimmkörperdefekts, was die Anzeige des Füllstands unmöglich und einen zeitnahen Austausch erforderlich macht.

Weiterhin wird ein Verfahren zum Messen des Füllstandes eines flüssigen Mediums in einem Behälter gemäß Anspruch 12 vorgeschlagen. Demnach wird eine erfindungsgemäße Niveausonde verwendet. In einem ersten Schritt - wobei die Schritte wiederholt und/oder kontinuierlich ausgeführt werden können - wird ein Abstand des Schwimmkörpers zu wenigstens zwei Messaufnehmern bestimmt. Daraus wird die axiale Position des Schwimmkörpers in dem Messrohr aus den erfassten Abständen berechnet. Hieraus wird schließlich der Füllstand unter Berücksichtigung des Schwimmverhaltens des Schwimmkörpers, insbesondere aus der angenommenen Eintauchtiefe des Schwimmkörpers in dem flüssigen Medium berechnet.

Vorzugsweise wird außerdem eine Temperatur in dem Behälter erfasst und abhängig von dieser erfassten Temperatur der berechnete Füllstand überprüft bzw. korrigiert. Die Korrektur kann beispielsweise dadurch erfolgen, dass aufgrund der Temperatur eine geänderte Dichte des flüssigen Mediums und damit eine geänderte Eintauchtiefe des Schwimmkörpers angenommen wird.

Vorzugsweise wird der Abstand zwischen Schwimmkörper und Messaufnehmer durch Messung der Induktivität des betreffenden Messaufnehmers bestimmt. Beispielsweise kann eine Funktion zwischen der Induktivität des betreffenden Messaufnehmers - der Messspule - und dem zugehörigen Abstand zwischen Schwimmkörper und Messaufnehmer zugrunde gelegt werden. Eine andere Möglichkeit besteht darin, eine Tabelle zugrunde zu legen. Eine solche Tabelle kann beispielsweise für die betreffende Niveausonde und das betreffende flüssige Medium empirisch aufgenommen werden. Auch die Temperatur und ihr Einfluss auf die Bestimmung des Füllstandes kann in eine solche Tabelle - und im Übrigen auch in eine oben genannte Funktion - einfließen.

Bei dem erfindungsgemäßen Verfahren sind vorzugsweise als Messaufnehmer mindestens zwei Spulen vorgesehen, und die Induktivität wird als Funktion einer von der Induktivität abhängigen Messgröße, vorzugsweise der die Spulen durchfließenden Stromstärke oder der Eigenfrequenz der Spulen bestimmt. Die Messung der von der Induktivität abhängigen Messgröße erfolgt bevorzugt mittels einer Auswerteeinheit, wobei vorzugsweise jede Spule unabhängig voneinander an eine separate Auswerteeinheit angeschlossen wird. Hierbei bilden jeweils für einen konkreten Füllstand, d.h. für eine bestimmte Position des Schwimmkörpers relativ zu den Spulen, die voneinander verschiedenen Induktivitäten der jeweiligen Spulen ein Paket von Messwerten. Dieses Paket von Messwerten wird der Position des Schwimmkörpers zugeordnet. Der Füllstand des Schwimmkörpers wird bestimmt, indem das zugeordnete Paket der Messwerte mit bereits vorbestimmten Messwerten für die jeweiligen Spulen abgeglichen wird. Die vorbestimmten Messwerte sind vorzugsweise in einer Tabelle und/oder einer Datenbank hinterlegt, auf welche die Auswerteeinheiten zugreifen. Die Hinterlegung der Messwerte in der Tabelle und/oder der Datenbank erfolgt vorzugsweise mittels eines Kalibriervorgangs.

Vorzugsweise umfasst das erfindungsgemäße Verfahren den Schritt: Kalibrieren der Niveausonde, wobei jeweils einer bestimmten Position des Schwimmkörpers Werte der Messgrößen von mindestens zwei Spulen, vorzugsweise zwei benachbarten Spulen, zugeordnet werden. Die Induktivität einer Spule ändert sich in Abhängigkeit der Nähe des Schwimmkörpers (vorzugsweise aus einem ferromagnetischen Material) zu dem Mittelpunkt der Spule. Die Induktivität einer Spule ist im vorliegenden Fall dann am Größten, wenn der Schwimmkörper sich direkt im Zentrum der Spule befindet. Auf Grund des symmetrischen Aufbaus von Spulen nimmt die Induktivität vom Zentrum aus zu beiden Seiten der Spule in gleicher Weise ab, wenn der Schwimmkörper sich aus dem Zentrum der Spule entfernt. Somit liefert eine Induktivitätsbestimmung mit nur einer Spule jeweils ein zweideutiges Ergebnis bezüglich der Position des Schwimmkörpers. Es kann mit nur einer Spule nicht zuverlässig bestimmt werden, ob der Schwimmkörper in die eine oder andere Richtung von dem Spulenkern beabstandet angeordnet ist.

Aus diesem Grund werden bevorzugt zwei oder mehr Spulen in Bezug auf die Position eines Schwimmkörpers zu einem gleichen Zeitpunkt betrachtet. Weiter bevorzugt werden hierzu zwei oder mehr benachbarte Spulen in Bezug auf die Position eines Schwimmkörpers zu einem Zeitpunkt betrachtet. Ergänzt man die Information bezüglich der Induktivität einer Spule mit einer zweiten Information bezüglich der Induktivität einer anderen, axial beabstandeten Spule, deren Abstand von dem Schwimmkörper ein anderer sein kann als der Abstand der ersten Spule von dem Schwimmkörper, erhält man aus diesem Wertepaar eine eindeutige Zuordnung der Position des Schwimmkörpers in Bezug auf die betrachteten Spulen. In analoger Weise lässt sich die Anzahl betrachteter Spulen auch auf drei oder mehr Spulen erhöhen, wodurch mehr als zwei Werte jeweils einer Schwimmkörper-Position zuordenbar sind.

Das erfindungsgemäße Verfahren umfasst vorzugsweise weiterhin einen oder mehrere der Schritte: Festlegen einer Position des Schwimmkörpers als minimaler Füllstand, wobei der Position des minimalen Füllstandes des Schwimmkörpers Werte der Messgrößen von mindestens zwei Spulen, vorzugsweise zwei benachbarten Spulen, zugeordnet werden, Festlegen einer Position des Schwimmkörpers als maximaler Füllstand, wobei der Position des maximalen Füllstandes des Schwimmkörpers Werte der Messgrößen von mindestens zwei Spulen, vorzugsweise zwei benachbarten Spulen, zugeordnet werden, und/oder Festlegen einer Mindestvarianz, um welche die Werte der Messgrößen der Spulen auch bei im Wesentlichen konstantem Füllstand schwanken müssen. Die Vorgabe von zulässigen Füllstandsober- und untergrenzen dient vorzugsweise dazu, im Kalibrier-Stadium der Niveausonde bzw. des Druckbehälters festzulegen, welches die zulässigen Arbeitsbereiche der Niveausonde und/oder des Druckbehälters sind.

Das in vorstehender Weise weitergebildete Verfahren ermöglicht auf vorteilhafte Weise die Erkennung eines Schwimmkörperdefekts, in dem es sich die Erkenntnis zu Nutze macht, dass auch bei im Wesentlichen unverändertem Füllstand eine gewisse Bewegung des Schwimmkörpers innerhalb des Messrohrs zu erwarten ist. Vollständiger Ruhestand des Schwimmkörpers ist im Betrieb der Anlage, in welcher die erfindungsgemäße Niveausonde zum Einsatz kommt, in der Regel nicht gegeben. Erwartungsgemäß pendelt also der Schwimmkörper in einem durch den Begriff Mindestvarianz gekennzeichneten Füllstandsbereich hin und her. Im Kalibriervorgang lässt sich ein Bereich dieser Mindestvarianz vorgeben, in welchem der Schwimmkörper erwartungsgemäß innerhalb einer bestimmten Zeitspanne schwanken muss. Unterschreitet der Messkörper diese Schwankung, bewegt er sich lediglich weniger, als dies im normalen Betrieb zu erwarten ist. Daraus kann auf eine abnormale Stilllegung des Schwimmkörpers geschlossen werden. Dies ist beispielsweise bei einem Verkanten oder Verklemmen des Schwimmkörpers im Messrohr der Fall, oder bei einem Absinken und Aufliegen auf dem Sicherungselement infolge einer Hüllen-Beschädigung des Schwimmkörpers.

Die Mindestvarianz äußert sich vorzugsweise also in einer Spanne von Werten der Messgrößen der Spulen, die sich durch die veränderte Position des Schwimmkörpers kontinuierlich ändern.

Eine bevorzugte Ausgestaltung des erfindungsgemäßen Verfahrens umfasst weiterhin einen oder mehrere der Schritte: Erzeugen einer Warnmeldung und/oder eines Unterbrechungssignals, wenn der kalibrierte maximale Füllstand erreicht oder überschritten wird, Erzeugen einer Warnmeldung und/oder eines Unterbrechungssignals, wenn der kalibrierte minimale Füllstand erreicht oder unterschritten wird, Erzeugen einer Warnmeldung und/oder eines Unterbrechungssignals, wenn die kalibrierte Mindestvarianz der Werte der Messgrößen unterschritten wird. Wird eine solche Warnmeldung und/oder ein solches Unterbrechungssignal erzeugt, wird der Betrieb des Druckbehälters, in welchem die erfindungsgemäße Niveausonde eingesetzt wird, vorzugsweise manuell oder automatisch unterbrochen. Vorteilhafterweise erfolgt dann im Anschluss auch eine Druck- bzw. Temperaturentlastung. Die Warnmeldung und/oder das Unterbrechungssignal kann bzw. können vorzugsweise mittels der Auswerteeinheit bzw. der Auswerteeinheiten erzeugt werden.

Es ist auch zu betonen, dass die genannten Verfahrensschritte beispielsweise mathematisch zusammengefasst werden könnten, so dass beispielsweise aus dem Abstand des Schwimmkörpers zu wenigstens zwei Messaufnehmern unmittelbar der Füllstand berechnet wird, oder dass beispielsweise aus dem gemessenen Induktivitätswerten unmittelbar ein Füllstand bestimmt wird.

Schließlich wird auch ein Druckbehälter mit einer erfindungsgemäßen Niveausonde vorgeschlagen. Ein solcher Druckbehälter und insbesondere die Niveausonde, mit der er ausgestattet ist, ist für einen Druck von wenigstens 40 bar, vorzugsweise wenigstens 80 bar und insbesondere wenigstens 120 bar, ausgelegt. Dies kann insbesondere durch die erfindungsgemäße Niveausonde erreicht werden, die einen Schwimmkörper vorschlägt, der teilweise mit Flüssigkeit gefüllt ist, so dass sich zumindest teilweise in dem Schwimmkörper ein Druck ausbildet, der dem Druck im Druckbehälter ähnlich ist, wodurch sich ein Differenzdruck zwischen Druckbehälter und dem Inneren des Schwimmkörpers verringern lässt.

Nachfolgend wird die Erfindung anhand von Ausführungsformen unter Bezugnahme auf die begleitenden Figuren beispielhaft näher erläutert.
- Figur 1: zeigt eine kapazitive Niveausonde in einer teilweisen Schnittansicht gemäß dem Stande der Technik.
- Figur 2: zeigt eine induktive Niveausonde in einer seitlichen Schnittansicht gemäß einer Ausführungsform der Erfindung.
- Figur 3: zeigt eine induktive Niveausonde in einer seitlichen Schnittansicht gemäß einer weiteren Ausführungsform der Erfindung.
- Figur 4: zeigt ein Diagramm mit Messwerten der erfindungsgemäßen Niveausonde.

Ähnliche aber nicht identische Elemente oder Merkmale können nachfolgend mit gleichen Bezugszeichen versehen sein.

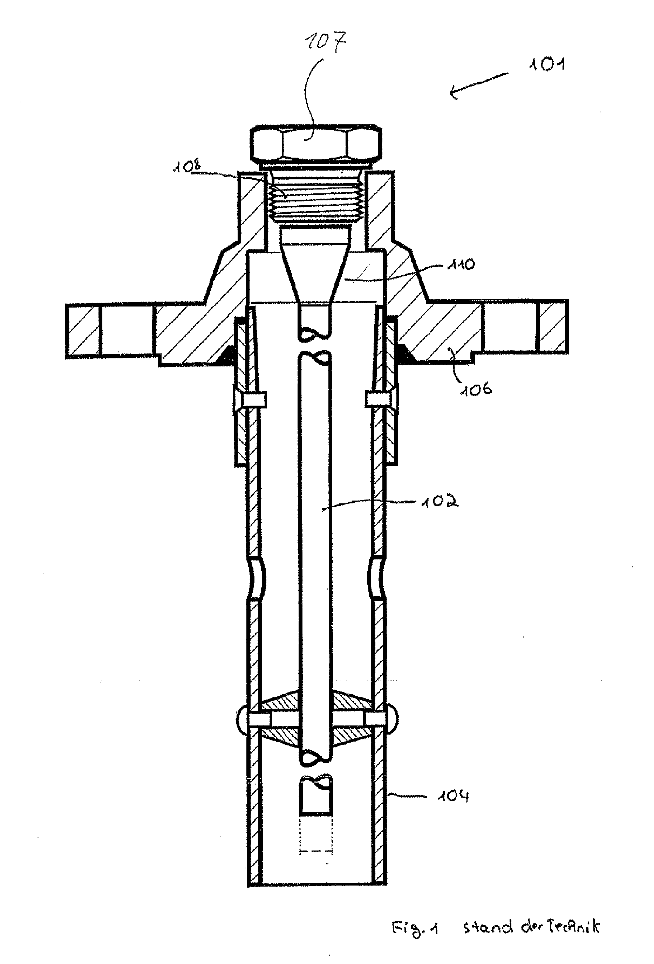

Figur 1 zeigt eine kapazitive Niveausonde 101 mit einer Elektrode 102, die zusammen mit dem umgebenden Rohr 104 einen Kondensator bildet bzw. messbare kapazitive Eigenschaften aufweist. Die Elektrode 102 wird bestimmungsgemäß zusammen mit dem umgebenden Rohr 104 in ein flüssiges Medium in einem Behälter eingetaucht, um dessen Füllstand zu messen. Der Füllstand dieses Mediums beeinflusst die kapazitiven Eigenschaften der beschriebenen Elektroden-Rohr Anordnung.

Zur Befestigung ist ein Flansch 106 vorgesehen, mit dem die kapazitive Niveausonde 104 im Bereich einer Behälteröffnung an dem Behälter befestigt wird, so dass die Elektrode 102 und das umgebende Rohr 104 durch die Öffnung hindurch in den Behälter ragt und dort in die Flüssigkeit eintaucht. Die Elektrode 102 weist ein Gehäuse 107 mit einem Gewinde 108 auf. Sie ist mittels des Gewindes 108 in den Flansch 106 eingesetzt und festgeschraubt. Die Elektrode 102 weist einen durchgängigen Kunststoffummantelung als elektrische Isolierung auf und einen Konusbereich 110 unterhalb des Gewindes 108. Es ist zum Abdichten ein weiterer konischer Dichtungsbereich in dem Gehäuse 107 auf Höhe des Gewindes 108 vorhanden. In diesem Bereich wird die Elektrode gegen das Gehäuse 107 abgedichtet.

Es besteht grundsätzlich die Gefahr, dass ein Medium aus dem Behälterinneren an dem konischen Dichtungsbereich vorbeiströmt - wenn auch in geringen Mengen - und beispielsweise in die kapazitive Niveausonde 101 oberhalb der Elektrode 102 eindringt und gegebenenfalls zu Verfälschungen der Messung, zu Beschädigung der kapazitiven Niveausonde 101 führt oder ggf. aus dem Behälter austritt, was insbesondere bei giftigen Medien problematisch ist.

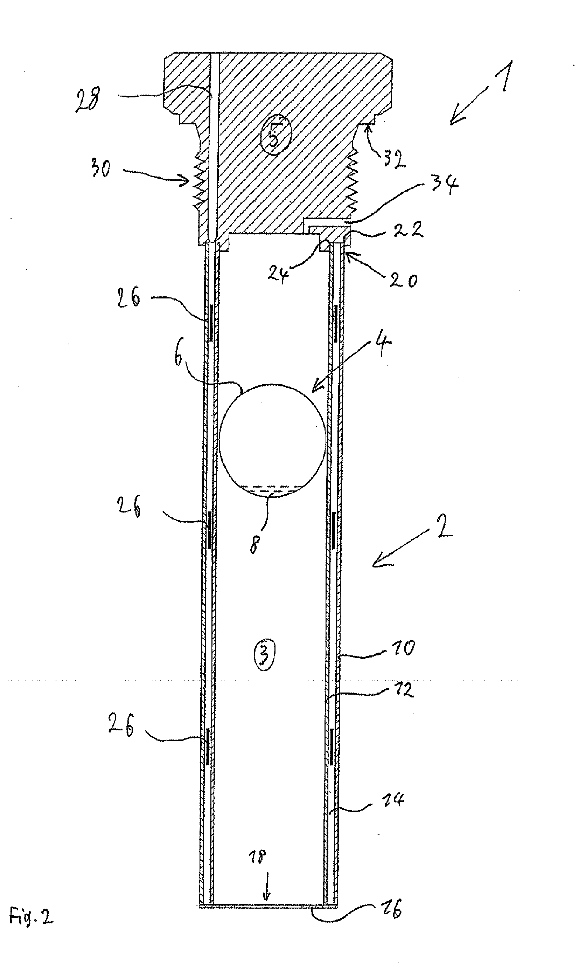

Die Niveausonde 1 der Figur 2, nachfolgend Sonde 1 genannt, weist eine Sondenbasis 5 mit einem Messrohr 2 mit einem Innenraum 3 und darin einem Schwimmkörper 4 auf. Der Schwimmkörper 4 ist als Hohlkugel mit einer Wandung 6 aus ferromagnetischem Stahl ausgebildet. In dem Schwimmkörper 4 ist eine geringe Menge Flüssigkeit 8, nämlich Wasser, vorgesehen. Der überwiegende Raum in dem Schwimmkörper 4 innerhalb der Wandung 6 ist jedoch nicht mit Flüssigkeit gefüllt, sondern mit Gas, insbesondere mit Wasserdampf und Luft.

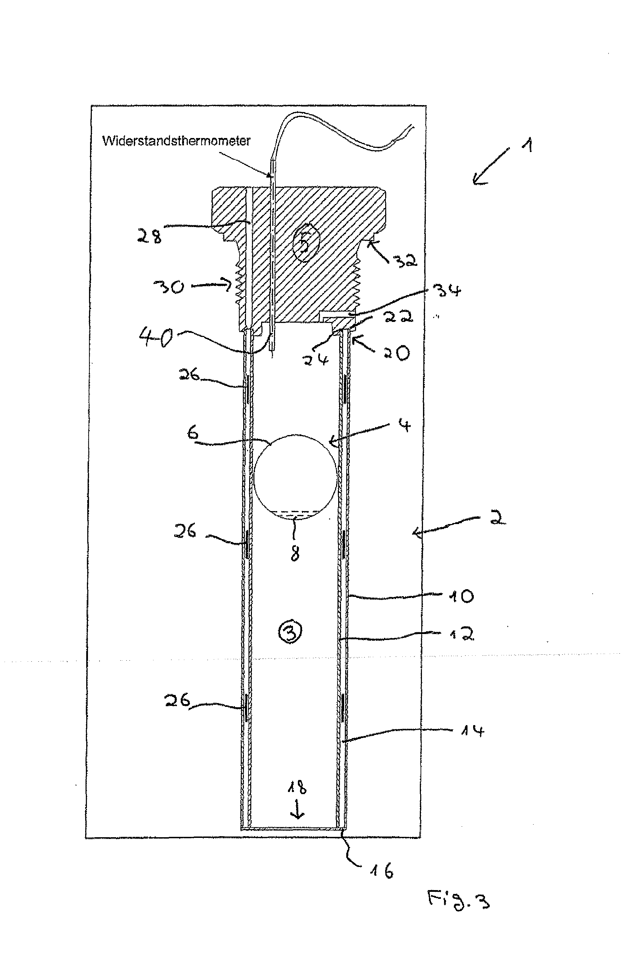

Die Position der Flüssigkeit 8 in dem Schwimmkörper 4 gibt auch die Richtung nach unten bei bestimmungsgemäßer Verwendung an. Der besseren Übersichtlichkeit halber ist in der Figur 2 - und in der Figur 3 - weder ein Behälter noch ein flüssiges Medium eingezeichnet. Tatsächlich würde der Schwimmkörper 4 an der Oberfläche des Mediums schwimmen, wobei der Füllstand des Mediums etwas oberhalb der Flüssigkeit 8 in dem Schwimmkörper 4 zu finden wäre.

Das Messrohr 2 ist hier doppelwandig ausgeführt mit einem äußeren Rohr 10 und einem inneren Rohr 12. Zwischen dem äußeren und inneren Rohr 10, 12, die beide zylindrisch ausgebildet sind, ist ein rohrförmiger Spalt vorhanden, der entsprechend als Ringspalt 14 ausgebildet ist. Der Ringspalt 14 ist zu einer bestimmungsgemäß nach unten gerichteten Seite mit einer Ringscheibe 16 verschlossen, nämlich verlötet bzw. verschweißt. Das äußere Rohr 10, das innere Rohr 12 und die Ringscheibe 16 sind aus einem austenitischen und damit paramagnetischen Material gefertigt. In der Ringscheibe 16 ist zudem eine erste Öffnung 18 ausgebildet, durch die flüssiges Medium in dem Behälter in den Innenraum 3 des Messrohrs 2 einströmen kann. Die erste Öffnung 18 ist dabei aber so klein, dass der Schwimmkörper 4 nicht den Innenraum 3 des Messrohrs 2 verlassen kann.

Weiterhin ist das Messrohr 2 mit seinem äußeren und inneren Rohr 10, 12 an der Sondenbasis 5 in einem ringförmigen Befestigungsbereich 20 fest und mediumsdicht befestigt. Der Befestigungsbereich 20 ist dabei im Wesentlichen als ringförmig umlaufende Nut in der Sondenbasis 5 ausgebildet. Dabei ist das äußere Rohr 10 mit einer vollständig umlaufenden Lötnaht 22 fest und dicht an der Sondenbasis befestigt. Entsprechend ist das innere Rohr 12 mit einer vollständig umlaufenden Lötnaht 24 in den Befestigungsbereich 20 an der Sondenbasis 5 fest und abdichtend befestigt.

In dem Ringspalt 14 sind drei Messsonden als Messspulen 26 äquidistant angeordnet. Die Messspulen 26 sind somit im Wesentlichen in dem Ringspalt 14 eingekapselt. Es ist lediglich ein Verbindungskanal 28 vorgesehen, der vollständig durch die Sondenbasis 5 hindurch zu dem Ringspalt 14 führt. Durch diesen Verbindungskanal können elektrische Leitungen zu den Messspulen 26 geführt werden, was in der Figur 2 zeichnerisch nicht ausgeführt ist.

Die Sondenbasis 5 weist ein Gewinde 30 auf, um in eine entsprechende Öffnung in einer Behälterwandung eingeschraubt zu werden. Eine Abdichtung dieser Behälteröffnung kann über die ringförmig umlaufende Ansatzfläche 32 erfolgen, die mittels des Gewindes 30 fest gegen eine Behälterwandung von außen gepresst und gegebenenfalls mit einer Dichtung wie einem Dichtungsring versehen werden kann. In diesem Fall ist der einzige mögliche Zugang zu dem Ringspalt 14 und damit zu den Messspulen 26 von außerhalb des Behälters durch den Verbindungskanal 28. Dabei ist zu beachten, dass der Ringspalt 14 und auch der Verbindungskanal 28 vergossen und/oder ausgeschäumt werden können, nachdem die Messspulen in Position und angeschlossen sind und entsprechende Verbindungsleitungen durch den Verbindungskanal 28 nach draußen geführt sind. Eine Abkapselung gegen das Behälterinnere ist in jedem Fall gegeben.

Schließlich ist in der Figur 2 noch eine zweite Öffnung 34 in der Sondenbasis 5 zum Druckausgleich des Innenraums 3 vorgesehen. Strömt bei steigendem Füllstand des Mediums in dem Behälter flüssiges Medium durch die erste Öffnung 18 in den Innenraum 3, kann Gas, insbesondere Wasserdampf, durch die zweite Öffnung 34 aus dem Innenraum 3 entweichen und somit für einen Druckabbau sorgen, so dass der Füllstand im Messrohr 2 dem Füllstand außerhalb des Messrohres 2 entspricht. Die zweite Öffnung 34 ist in der Sondenbasis 5 ausgebildet, was beispielsweise durch zwei einfache Bohrungen in der Sondenbasis hergestellt werden kann.

Die Sonde 1 der Figur 3 entspricht im Wesentlichen der Sonde 1 der Figur 2, wobei zusätzlich ein Temperaturmessfühler 40 vorgesehen ist, der als Pt100-Messfühler ausgebildet ist. Der Temperaturfühler 40 bzw. Temperatursensor 40 ist von außen durch die Sondenbasis 5 zum Innenraum 3 des Messrohres 2 geführt, um dort im bestimmungsgemäß oberen Bereich eine Temperatur zu messen.

Somit wird eine Niveausonde vorgeschlagen, die auf einfache Weise eine Einkapselung der Messsensoren gegenüber dem Behälterinneren schafft und außerdem für hohe Druckbereiche von über 40 bar, je nach Ausführungsform bis über 150 bar einsatzfähig ist.

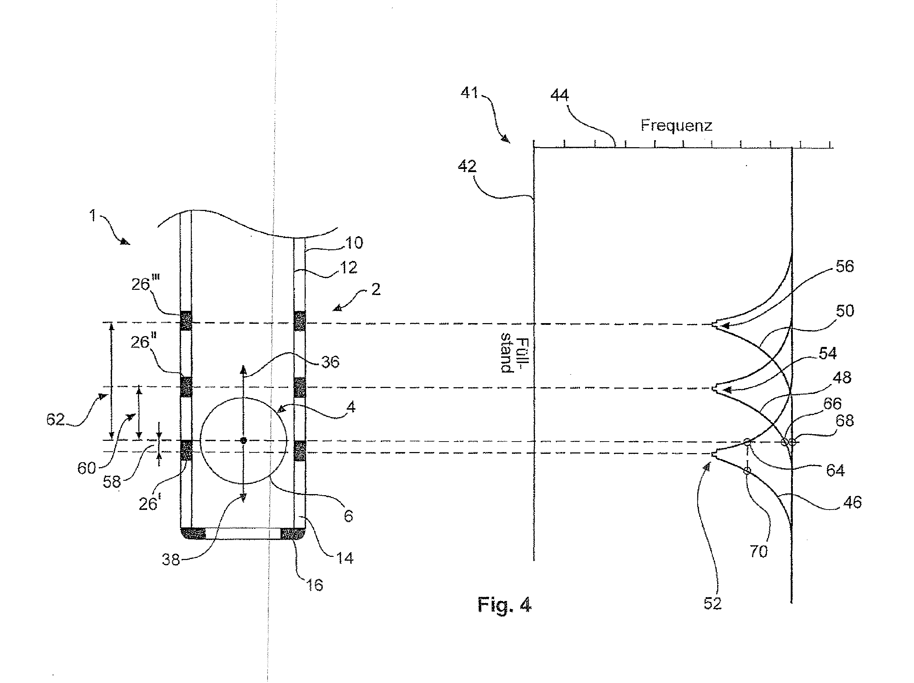

Zur Veranschaulichung der Füllstandsbestimmung und/oder der Kalibrierung der erfindungsgemäßen Niveausonde ist in Figur 4 eine schematische Gegenüberstellung einer Niveausonde 1 mit einem Messwert-Diagramm 41 abgebildet. Die in Figur 4 dargestellte Niveausonde 1 weist ein Messrohr 2 auf, in dem eine erste Spule 26', eine zweite Spule 26" und eine dritte Spule 26'" zwischen einem äußeren Rohr 10 und einem inneren Rohr 12 voneinander beabstandet angeordnet sind. Das äußere Rohr 10 und das innere Rohr 12 sind mittels einer Ringscheibe 16 als Sicherungselement an einem der (nicht dargestellten) Sondenbasis gegenüberliegenden Ende verbunden. Im Inneren des Messrohrs 2 ist ein Schwimmkörper 4 mit einer Wandung 6 aus ferromagnetischem Material angeordnet. Der Schwimmkörper 4 bewegt sich entlang der Pfeile 36, 38 im Messrohr in gezeigter Orientierung nach oben oder unten. Der Schwimmkörper 4 weist einen Mittelpunkt auf, welcher in Richtung des Messrohrs einen Abstand 58 zu dem Mittelpunkt der ersten Spule 26' aufweist. Der Mittelpunkt des Schwimmkörpers 4 weist weiterhin einen Abstand 60 zum Mittelpunkt der zweiten Spule 26" auf. Weiterhin weist der Mittelpunkt des Schwimmkörpers 4 in Richtung des Messrohrs 2 einen Abstand 62 zu dem Mittelpunkt der dritten Spule 26'" auf. Der Darstellung der Niveausonde 1 ist eine Darstellung eines Diagramms 41 gegenübergestellt. In dem Diagramm sind auf einer Achse 44 die Frequenz und auf einer Achse 42 der Füllstand in einem Druckbehälter aufgetragen. Die Orientierung der Achse des Füllstands entspricht im Wesentlichen der in Figur 4 dargestellten Ausrichtung des Messrohres 2. In Diagramm 41 sind drei Kurven 46, 48, 50 dargestellt. Die erste Kurve 46 repräsentiert hierin einen Frequenzgang, welcher der ersten Spule 26' zugeordnet ist. Die zweite Kurve 48 repräsentiert in gleicher Weise einen Frequenzgang, welcher der zweiten Spule 26" zugeordnet ist. Die dritte Kurze 50 repräsentiert einen Frequenzgang, welcher der dritten Spule 26'" zugeordnet ist. Als Frequenz ist vorzugsweise die Eigenfrequenz der Spulen 26', 26", 26'" in dem Diagramm aufgetragen, welche sich abhängig von der Position des Schwimmkörpers 4 relativ zu den Spulen 26', 26", 26'" ändert.

Die drei Kurven 46, 48, 50 weisen jeweils einen Peak auf. Der Peak 52 repräsentiert hierbei die Position des Mittelpunkts der ersten Spule 26', während der zweite Peak 54 der zweiten Kurve 48 die Position des Mittelpunkts der zweiten Spule 26" repräsentiert, und der dritte Peak 56 der dritten Kurve 50 den Mittelpunkt der dritten Spule 26"' repräsentiert.

Die jeweils isolierte Betrachtung der Kurven 46, 48, 50 zeigt, dass sich die Frequenz zu beiden Seiten des jeweiligen Mittelpunkts der Spule symmetrisch verändert.

In der dargestellten Position des Schwimmkörpers 4 im Messrohr 2 liefert die Erfassung der Induktivität der ersten Spule 26' einen Frequenzwert 64. Die Erfassung der Induktivität der zweiten Spule 26" liefert einen zweiten Frequenzwert 66, und die Erfassung der Induktivität der dritten Spule 26'" liefert einen dritten Frequenzwert 68. Es existiert beispielsweise zu dem Frequenzwert 64 noch ein zweiter Frequenzwert 70 mit dem gleichen Betrag. Würde man lediglich eine Spule - die erste Spule 26' - zur Erfassung der Induktivität verwenden, wäre aus dem Frequenzwert, der sich in der gezeigten Position des Schwimmkörpers 4 in dem Messrohr 2 einstellt, nicht eindeutig ableitbar, ob der Schwimmkörper in gezeigter Darstellung oberhalb oder unterhalb des Zentrums der ersten Spule 26' angeordnet ist. Nimmt man allerdings in die Betrachtung die zweite Spule 26" und/oder die dritte Spule 26'" auf, erhält man zusätzlich zu dem ersten Frequenzwert 64 noch den zweiten Frequenzwert 66, und gegebenenfalls den dritten Frequenzwert 68. Das Paket dieser drei Frequenzwerte unterscheidet sich für jede Position des Schwimmkörpers 4 im Messrohr 2 jeweils voneinander. Die Verhältnisse der Frequenzwerte 64, 66, 68 sind bei unterschiedlichen Füllständen jeweils unterschiedlich zueinander. Hieraus ergibt sich in anschaulicher Weise die eindeutige Positionsbestimmung des Schwimmkörpers relativ zu den Spulen 26', 26", 26"' und somit relativ zu der Niveausonde 1. Es gibt nur einen Füllstand, bei dem die Induktivität der ersten Spule den Wert 64 annimmt, die Induktivität der zweiten Spule den Wert 66, und die Induktivität der dritten Spule den Wert 68.

## Patentansprüche

1. Niveausonde (1) zum Erfassen eines Füllstandes eines flüssigen Mediums in einem Behälter, umfassend
- ein eine Längsachse aufweisendes Messrohr (2) zum Anordnen in dem Behälter, mit einem Rohrinnenraum (3) und einem den Rohrinnenraum (3) umgebenden Rohrmantel,
- einen in dem Messrohr (2) im Rohrinnenraum (3) angeordneten Schwimmkörper (4) zum Aufschwimmen in dem Medium und
- wenigstens einen in dem Messrohr (2) angeordneten Messaufnehmer (26) zum Erfassen der Position des Schwimmkörpers (4) in dem Messrohr (2) in Richtung der Längsachse,
wobei der Schwimmkörper (4) geschlossen und teilweise mit einer Flüssigkeit (8) gefüllt ist.

2. Niveausonde (1) nach Anspruch 1, **dadurch gekennzeichnet, dass** als Messaufnehmer (26) wenigstens zwei den Rohrinnenraum umgebende Messspulen (26) in dem Rohrmantel eingeschlossen und in Richtung der Längsachse des Messrohres (2) beabstandet angeordnet sind zum Bestimmen der Position des Schwimmkörpers (4) über die Erfassung der Induktivität der Messspulen (26).

3. Niveausonde (1) nach Anspruch 1 oder 2, **dadurch gekennzeichnet, dass** der Rohrmantel doppelwandig aus austenitischem oder paramagnetischem Material gefertigt ist, so dass in dem Rohrmantel ein rohrförmiger Spalt (14) ausgebildet ist und wobei wenigstens zwei Messaufnehmer (26) als Messspulen (26) in dem rohrförmigen Spalt (14) angeordnet sind.

4. Niveausonde (1) nach einem der vorstehenden Ansprüche, umfassend eine Sondenbasis (5) mit einem Befestigungsflansch zum Befestigen in einer Öffnung einer Behälterwand des Behälters, so dass das Messrohr (2) in den Behälter ragt, ein Teil der Sondenbasis (5) außerhalb des Behälters angeordnet ist und die Öffnung durch die Sondenbasis (5) verschlossen wird,
wobei der Rohrmantel so an der Sondenbasis (5) angebracht ist, dass der bzw. ein in dem Messrohrmantel ausgebildeter rohrförmiger Spalt (14) vollständig gegen den Behälterinnenraum (3) abgedichtet ist und dass der rohrförmige Spalt (14) gar nicht oder nur von außerhalb des Behälters über die Sondenbasis (5) zugänglich ist.

5. Niveausonde (1) nach einem der vorstehenden Ansprüche, **gekennzeichnet durch** wenigstens eine erste und eine zweite Öffnung (18, 34) zum Herstellen einer Verbindung zwischen dem Rohrinnenraum (3) und einem Behälterinnenraum, in dem das flüssige Medium aufgenommen ist, wobei vorzugsweise
- die erste Öffnung (18) in einer einem bzw. der Sondenbasis abgewandten Stirnseite des Messrohres (2) angeordnet ist, so dass das flüssige Medium **durch** diese Öffnung (18) in das Messrohr (2) einströmen, bzw. aus dem Messrohr (2) herausströmen kann und/oder
- die zweite Öffnung (34) zur ersten beabstandet und im Bereich einer bzw. der Sondenbasis (5) in dem Messrohr (2) und/oder in der Sondenbasis (5) angeordnet ist, so dass Gas aus dem Rohrinnenraum (3) ausströmen bzw. in den Rohrinnenraum (3) einströmen kann, so dass das flüssige Medium mit dem Rohrinnenraum (3) frei kommunizieren kann.

6. Niveausonde (1) nach einem der vorstehenden Ansprüche, **dadurch gekennzeichnet, dass**
wenigstens ein Temperatursensor (40) zum Erfassen einer Temperatur in dem Behälter, insbesondere einer Temperatur des flüssigen Mediums oder seiner Gasphase, insbesondere Wasserdampf vorgesehen ist.

7. Niveausonde (1) nach einem der vorstehenden Ansprüche, **dadurch gekennzeichnet, dass**
die Niveausonde (1) für einen Druckbereich in dem Behälter mit einer vorbestimmten Druckobergrenze vorgesehen ist, und die Druckobergrenze oberhalb von 40 bar, vorzugsweise oberhalb von 80 bar, insbesondere oberhalb von 120 bar liegt,
wobei in dem Schwimmkörper (4) wenigstens so viel Flüssigkeit (8) vorhanden ist, dass noch ein Teil der Flüssigkeit (8) in flüssigem Zustand verbleibt, wenn der Druck in dem Schwimmkörper (4) die Druckobergrenze des vorbestimmten Druckbereichs erreicht hat bzw. dass in dem Schwimmkörper wenigstens so viel Flüssigkeit (8), insbesondere Wasser (8) vorhanden ist, dass die Flüssigkeit (8) auch bei Erreichen der Druckobergrenze nicht vollständig verdampft.

8. Niveausonde (1) nach einem der vorstehenden Ansprüche, **dadurch gekennzeichnet, dass**
- das Messrohr (2) zylindrisch ausgebildet ist,
- der Schwimmkörper (4) als Hohlkugel (4) ausgebildet ist und/oder
- der Schwimmkörper (4) eine Wandung (6) aus einem ferromagnetischen Stahl aufweist.

9. Niveausonde (1) nach einem der vorstehenden Ansprüche, **dadurch gekennzeichnet, dass**
ein Sicherungselement vorgesehen ist, welches verhindert, dass der Schwimmkörper (4) das Messrohr (2) verlässt, und vorzugsweise als Ringscheibe (16) oder als Sicherungsstift ausgebildet ist.

10. Niveausonde (1) nach einem der vorstehenden Ansprüche, **dadurch gekennzeichnet, dass**
der Schwimmkörper eine oder mehrere Sollbruchstellen aufweist.

11. Niveausonde (1) nach einem der vorstehenden Ansprüche, **dadurch gekennzeichnet, dass**
die Niveausonde (1) zum Bestimmen einer Füllstandsüberschreitung und/oder einer Füllstandsunterschreitung und/oder eines Schwimmkörperdefekts mittels der Erfassung der Induktivität der Messspulen (26) ausgebildet ist.

12. Verfahren zum Messen des Füllstandes eines flüssigen Mediums in einem Behälter mittels einer Niveausonde (1) nach einem der vorstehenden Ansprüche, die mit ihrem Messrohr (2) in den Behälter eingesetzt ist, umfassend die Schritte:
- Erfassen eines Abstandes des Schwimmkörpers (4) zu wenigstens zwei Messaufnehmern (26),
- Berechnen der axialen Position des Schwimmkörpers (4) in dem Messrohr (2) aus den erfassten Abständen und
- Berechnen des Füllstandes aus der axialen Position des Schwimmkörpers (4) unter Berücksichtigung seines Schwimmverhaltens, insbesondere seiner angenommenen Eintauchtiefe in dem flüssigen Medium.

13. Verfahren nach Anspruch 12, weiter umfassend die Schritte
- Erfassen einer Temperatur in dem Behälter und
- Überprüfen und ggf. Korrigieren des berechneten Füllstandes abhängig von der erfassten Temperatur.

14. Verfahren nach Anspruch 12 oder 13, **dadurch gekennzeichnet, dass** der jeweilige Abstand zwischen Schwimmkörper (4) und Messaufnehmer (26) durch Messung der Induktivität des Messaufnehmers (26) bestimmt wird.

15. Verfahren nach Anspruch 14, wobei vorzugsweise als Messaufnehmer mindestens zwei Spulen vorgesehen sind, und die Induktivität als Funktion einer von der Induktivität abhängigen Messgröße,
vorzugsweise der die Spulen durchfließenden Stromstärke oder der Eigenfrequenz der Spulen bestimmt wird.

16. Verfahren nach Anspruch 15, umfassend den Schritt:
- Kalibrieren der Niveausonde, wobei jeweils einer bestimmten Position des Schwimmkörpers (4) Werte der Messgrößen von mindestens zwei Spulen, vorzugsweise zwei benachbarten Spulen, zugeordnet werden,

17. Verfahren nach Anspruch 16, wobei das Kalibrieren weiterhin einen oder mehrere der Schritte umfasst:
- Festlegen einer Position des Schwimmkörpers (4) als minimaler Füllstand, wobei der Position des minimalen Füllstandes des Schwimmkörpers (4) Werte der Messgrößen von mindestens zwei Spulen, vorzugsweise zwei benachbarten Spulen, zugeordnet werden,
- Festlegen einer Position des Schwimmkörpers (4) als maximaler Füllstand, wobei der Position des maximalen Füllstandes des Schwimmkörpers (4) Werte der Messgrößen von mindestens zwei Spulen, vorzugsweise zwei benachbarten Spulen, zugeordnet werden, und/oder
- Festlegen einer Mindestvarianz, um welche die Werte der Messgrößen der Spulen auch bei im Wesentlichen konstantem Füllstand schwanken müssen.

18. Verfahren nach Anspruch 17, weiterhin umfassend einen oder mehrere der Schritte:
- Erzeugen einer Warnmeldung und/oder eines Unterbrechungssignals, wenn der kalibrierte maximale Füllstand erreicht oder überschritten wird,
- Erzeugen einer Warnmeldung und/oder eines Unterbrechungssignals, wenn der kalibrierte minimale Füllstand erreicht oder unterschritten wird,
- Erzeugen einer Warnmeldung und/oder eines Unterbrechungssignals, wenn die kalibrierte Mindestvarianz der Werte der Messgrößen unterschritten wird.

19. Druckbehälter zum Aufnehmen eines flüssigen Mediums unter Druck, umfassend eine Niveausonde (1) nach einem der Ansprüche 1 bis 8 zum Messen des Füllstandes des Mediums in dem Behälter, wobei der Druckbehälter zum Aufnehmen eines Drucks von mehr als 40 bar, vorzugsweise mehr als 80 bar, insbesondere mehr als 120 bar vorbereitet ist.
